# EUROPEAN PATENT APPLICATION

(11) **EP 3 911 036 A1**
(43) Date of publication of application: **17.11.2021**
(21) Application number: 20738039.5
(22) Date of filing: 10.01.2020
(51) Int. Cl.: H04W 52/14, H04W 52/24

(54) **MEASUREMENT METHOD AND DEVICE**

(30) Priority: 10.01.2019 CN 201910022382
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: LI, Yan, Beijing 100032 (CN); WANG, Fei, Beijing 100032 (CN); JIN, Jing, Beijing 100032 (CN); ZHENG, Yi, Beijing 100032 (CN); WANG, Hanning, Beijing 100032 (CN); WANG, Qixing, Beijing 100032 (CN); LIU, Guangyi, Beijing 100032 (CN)
(74) Representative: J A Kemp LLP
(86) International application number: PCT/CN2020/071488
(87) International publication number: WO 2020/143784

(57) **Abstract**

Provided by the embodiments of the present disclosure are a measurement method and device, the method comprising: providing a first resource and a second resource to a terminal, wherein the first resource is used for the terminal to measure the reference signal receiving power of a downlink beam, and the second resource is used for the terminal to measure the interference of the downlink beam.

## Description

### CROSS-REFERENCE TO RELATED APPLICATION

The application claims priority to Chinese Patent Application No. 201910022382.0 filed on January 10, 2019, the entire contents of which are hereby incorporated by reference in its entirety.

### TECHNICAL FIELD

The disclosure relates to the technical field of communication, and particularly to a measurement method and device.

### BACKGROUND

Beam measurement in the related art is only based on a Layer One-Reference Signal Receive Power (L1-RSRP) value, and does not consider interferences to beams. There may be a condition that a selected beam has a relatively high L1-RSRP value but is subjected to a great interference and thus a Layer One-Signal to Interference plus Noise Ratio (L1-SINR) value of the beam is relatively low.

Therefore it may be seen that a downlink beam measurement in the related art is only based on the L1-RSRP value and does not consider interferences to downlink beams.

### SUMMARY

Embodiments of the disclosure provide a measurement method and device, to solve the problem that the downlink beam measurement in the related art is only based on the L1-RSRP value and does not consider interferences to downlink beams.

According to a first aspect of the embodiments of the disclosure, there is provided a measurement method, which may be applied to a network device and include the following operations.

A first resource and a second resource are configured for a terminal, the first resource is configured for the terminal to measure a Reference Signal Receive Power (RSRP) of a downlink beam, and the second resource is configured for the terminal to measure an interference to the downlink beam.

In an embodiment, the operation that the first resource and the second resource are configured for the terminal, the first resource is configured to measure the RSRP of the downlink beam, and the second resource is configured for the terminal to measure the interference to the downlink beam, may include the following operations.

N first resources and N second resources are configured for the terminal, the first resource is configured for the terminal to measure a L1-RSRP value of a Channel State Information Reference Signal (CSI-RS) or a Synchronization Signal and Physical Broadcast Channel (PBCH) Block (SSB) of the downlink beam, the second resource is configured for the terminal to measure the interference to the downlink beam, and N is greater than or equal to 1.

In an embodiment, the operation that the first resource and the second resource are configured for the terminal, the first resource is configured to measure the RSRP of the downlink beam, and the second resource is configured for the terminal to measure the interference to the downlink beam, may include the following operations.

M first resources and one second resource are configured for the terminal, the first resource is configured for the terminal to measure a L1-RSRP value of a CSI-RS or a SSB of the downlink beam, the second resource is configured for the terminal to measure the interference to the downlink beam, and M is greater than or equal to 1.

In an embodiment, the second resource may be a Zero Power (ZP) CSI-RS resource, or a Non-Zero Power (NZP) CSI-RS resource, or a SSB resource.

According to a second aspect of the embodiments of the disclosure, there is also provided a measurement method, which may be applied to a terminal and include the following operations.

A first resource and a second resource configured by a network device are acquired, the first resource is configured for the terminal to measure a RSRP of a downlink beam, and the second resource is configured for the terminal to measure an interference to the downlink beam.

A first measurement result is obtained by measuring the RSRP of the downlink beam according to the first resource, and a second measurement result is obtained by measuring the interference to the downlink beam according to the second resource.

A Layer One-Signal to Interference plus Noise Ratio (L1-SINR) value of each downlink beam is obtained according to the first measurement result and the second measurement result.

In an embodiment, the operation that the first resource and the second resource configured by the network device are acquired, the first resource is configured for the terminal to measure the RSRP of the downlink beam, and the second resource is configured for the terminal to measure the interference to the downlink beam, may include the following operations.

N first resources and N second resources configured by the network device are acquired, the first resource is configured for the terminal to measure a L1-RSRP value of a CSI-RS or a SSB of the downlink beam, the second resource is configured for the terminal to measure the interference to the downlink beam, and N is greater than or equal to 1.

The operation that the first measurement result is obtained by measuring the RSRP of the downlink beam according to the first resource and the second measurement result is obtained by measuring the interference to the downlink beam according to the second resource, may include the following operations.

L1-RSRP values of N downlink beams are obtained by measuring the L1-RSRP value of the CSI-RS or the SSB of the downlink beam according to the N first resources.

Interference values of the N downlink beams are obtained by measuring the interference to the downlink beam according to the N second resources.

In an embodiment, the operation that the L1-SINR of the downlink beam is obtained according to the first measurement result and the second measurement result may include the following operations.

L1-SINR values of the N downlink beams are obtained according to the L1-RSRP values of the N downlink beams and the interference values of the N downlink beams.

In an embodiment, the operation that the first resource and the second resource configured by the network device are acquired, the first resource is configured for the terminal to measure the RSRP of each downlink beam, and the second resource is configured for the terminal to measure the interference to each downlink beam, may include the following operations.

M first resources and one second resource configured by the network device are acquired, the first resource is configured for the terminal to measure a L1-RSRP value of a CSI-RS or a SSB of the downlink beam, the second resource is configured for the terminal to measure the interference to the downlink beam, and M is greater than or equal to 1.

The operation that the first measurement result is obtained by measuring the RSRP of the downlink beam according to the first resource, and the second measurement result is obtained by measuring the interference to the downlink beam according to the second resource, may include the following operations.

L1-RSRP values of M downlink beams are obtained by measuring the L1-RSRP value of the CSI-RS or the SSB of the downlink beam according to the M first resources.

One interference value is obtained by measuring the interference to the downlink beam according to the one second resource.

The operation that the L1-SINR value of the downlink beam is obtained according to the first measurement result and the second measurement result may include the following operations.

L1-SINR values of the M downlink beams are obtained according to the L1-RSRP values of the M downlink beams and one interference value.

In an embodiment, the second resource may be a ZP CSI-RS resource, or a NZP CSI-RS resource, or a SSB resource.

In an embodiment, the method may further include the following operations.

One CSI-RS Resource Indication (CRI) or SSB Resource Indication (SSBRI) and at least one of the corresponding L1-RSRP value or L1-SINR value are reported to the network device.

Or,
two CRIs or SSBRIs and at least one of the corresponding L1-RSRP values or L1-SINR values are differentially reported to the network device.

Or,
four CRIs or SSBRIs and at least one of the corresponding L1-RSRP values or L1-SINR values are differentially reported to the network device.

According to a third aspect of the embodiments of the disclosure, there is also provided a network device, which may include a first transceiver and a first processor.

The first processor may be configured to configure a first resource and a second resource for a terminal, the first resource is configured for the terminal to measure a RSRP of a downlink beam, and the second resource is configured for the terminal to measure an interference to the downlink beam.

In an embodiment, the first processor may be further configured to configure N first resources and N second resources for the terminal, the first resource is configured for the terminal to measure a L1-RSRP value of a CSI-RS or a SSB of the downlink beam, the second resource is configured for the terminal to measure the interference to the downlink beam, and N is greater than or equal to 1.

In an embodiment, the first processor may be further configured to configure M first resources and one second resource for the terminal, the first resource is configured for the terminal to measure a L1-RSRP value of a CSI-RS or a SSB of each of M downlink beams, the second resource is configured for the terminal to measure the interference to the downlink beam, and M is greater than or equal to 1.

In an embodiment, the second resource may be a ZP CSI-RS resource, or a NZP CSI-RS resource, or a SSB resource.

According to a fourth aspect of the embodiments of the disclosure, there is also provided a terminal, which may include a second processor and a second transceiver.

The second transceiver may be configured to acquire a first resource and a second resource configured by a network device, the first resource is configured for the terminal to measure a RSRP of a downlink beam, and the second resource is configured for the terminal to measure an interference to the downlink beam.

The second processor may be configured to obtain a first measurement result by measuring the RSRP of the downlink beam according to the first resource, and obtain a second measurement result by measuring the interference to the downlink beam according to the second resource.

The second processor may be further configured to obtain a L1-SINR value of each downlink beam according to the first measurement result and the second measurement result.

In an embodiment, the second transceiver may be further configured to acquire N first resources and N second resources configured by the network device, the first resource is configured for the terminal to measure a L1-RSRP value of a CSI-RS or a SSB of each of N downlink beams, the second resource is configured for the terminal to measure the interference to each of the N downlink beams, and N is greater than or equal to 1.

The second processor may be further configured to obtain a L1-RSRP value of each downlink beam by measuring the L1-RSRP value of the CSI-RS or the SSB of each of the N downlink beams according to the N first resources, and obtain a L1-SINR value of each downlink beam by measuring the interference to each of the N downlink beams according to the N second resources.

In an embodiment, the second transceiver may be further configured to acquire M first resources and one second resource configured by the network device, the first resource is configured for the terminal to measure a L1-RSRP value of a CSI-RS or a SSB of each of M downlink beams, the second resource is configured for the terminal to measure the interference to each downlink beam, and M is greater than or equal to 1.

The second processor may be further configured to obtain a L1-RSRP value of each downlink beam by measuring the L1-RSRP value of the CSI-RS or the SSB of each of the M downlink beams according to the M first resources, and obtain a L1-SINR value of each downlink beam by measuring the interference to the downlink beam according to the one second resource.

In an embodiment, the second resource may be a ZP CSI-RS resource, or a NZP CSI-RS resource, or a SSB resource.

In an embodiment, the second transceiver may be further configured to:
report one CRI or SSBRI and at least one of the corresponding L1-RSRP value or L1-SINR value to the network device;
or,
differentially report two CRIs or SSBRIs and at least one of the corresponding L1-RSRP values or L1-SINR values to the network device;
or,
differentially report four CRIs or SSBRIs and at least one of the corresponding L1-RSRP values or L1-SINR values to the network device.

According to a fifth aspect of the embodiments of the disclosure, there is also provided a communication device, which may include a processor, a memory, and a program stored in the memory and executable on the processor, the program is executed by the processor to implement the steps of the measurement method as described in the first aspect or the second aspect.

According to a sixth aspect of the embodiments of the disclosure, there is also provided a computer-readable storage medium, having stored thereon a computer program, the computer program is executed by a processor to implement the steps of the measurement method as described in the first aspect or the second aspect.

In the embodiments of the disclosure, a resource configured to measure an interference to a downlink beam is configured to measure a L1-SINR of the downlink beam of the terminal, so that the problem that a downlink beam measurement in the related art is only based on the L1-RSRP value and does not consider interferences to downlink beams is solved.

### BRIEF DESCRIPTION OF THE DRAWINGS

In order to describe the technical solutions of the embodiments of the disclosure more clearly, the drawings to be used in the descriptions of the embodiments will be briefly introduced below. It is apparent that the drawings described below are merely some embodiments of the disclosure. Other drawings may be further obtained by those of ordinary skill in the art according to these drawings without paying any creative work.

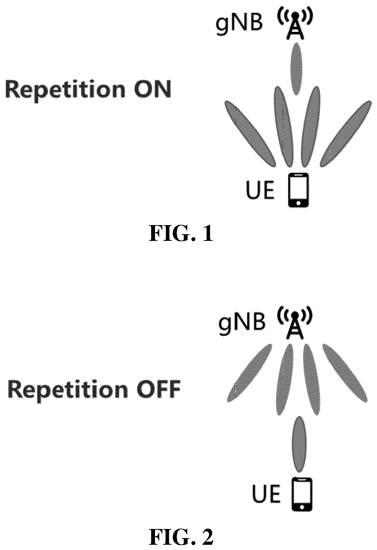

FIG. 1 is a first schematic diagram of downlink beam measurement in the related art.
FIG. 2 is a second schematic diagram of downlink beam measurement in the related art.
FIG. 3 is a schematic architecture diagram of a wireless communication system according to an embodiment of the disclosure.
FIG. 4 is a first flowchart of a measurement method according to an embodiment of the disclosure.
FIG. 5 is a second flowchart of a measurement method according to an embodiment of the disclosure.
FIG. 6 is a third flowchart of a measurement method according to an embodiment of the disclosure.
FIG. 7 is a fourth flowchart of a measurement method according to an embodiment of the disclosure.
FIG. 8 is a fifth flowchart of a measurement method according to an embodiment of the disclosure.
FIG. 9 is a sixth flowchart of a measurement method according to an embodiment of the disclosure.
FIG. 10 is a schematic structural diagram of a network device according to an embodiment of the disclosure.
FIG. 11 is a schematic structural diagram of a terminal according to an embodiment of the disclosure.
FIG. 12 is a schematic structural diagram of a communication device according to an embodiment of the disclosure.

### DETAILED DESCRIPTION

In order to make the technical problem to be solved, technical solutions and advantages of the disclosure clearer, detailed descriptions will be made below in combination with the drawings and specific embodiments.

In order to facilitate understanding the embodiments of the disclosure, the following technical points will be introduced at first.

### I. Descriptions about downlink beam measurement.

➢ A high layer sends a CSI-RS/SSB, and a terminal measures a L1-RSRP value of the CSI-RS/SSB of each beam.
➢ At most 64 beams are measured.

When the CSI-RS is used for beam measurement, a high-layer parameter of the CSI-RS may include a "Repetition" field that indicates on or off.
➢ Repetition on represents that a base station sends the CSI-RS in a fixed beam direction and the terminal rotates its own downlink beam at different moments to receive the CSI-RS and measures a L1-RSRP value of the CSI-RS of each downlink beam.
➢ Repetition off represents that the base station sends the CSI-RS in multiple beam directions and the terminal measures a L1-RSRP value of the CSI-RS of a beam in each direction.

### II. Descriptions about downlink beam quality reporting.

➢ When nrofRepotedRS=1, one CRI/SSBRI and a corresponding L1-RSRP value are reported.
> The L1-RSRP value in a range of [-140, -44]dBm is indicated by 7 bits.
> 1 dB step.
> When nrofReportedRS> 1, one, two or four CRIs/SSBRIs and corresponding L1-RSRP values are differentially reported.
➢ A RSRP difference with respect to an optimal beam is indicated by 4 bits.
> 2 dB step.

The technologies described herein are not limited to a 5th-Generation (5G) system and a subsequent evolved communication system, and are not limited to a Long Time Evolution (LTE)/LTE-Advanced (LTE-A) system, and may also be applied to various wireless communication systems, such as Code Division Multiple Access (CDMA), Time Division Multiple Access (TDMA), Frequency Division Multiple Access (FDMA), Orthogonal Frequency Division Multiple Access (OFDMA), Single-Carrier Frequency-Division Multiple Access (SC-FDMA), and another system.

Terms "system" and "network" are usually used interchangeably. The CDMA system may implement radio technologies such as CDMA 2000 and Universal Terrestrial Radio Access (UTRA), etc. UTRA includes Wideband CDMA (WCDMA) and another CDMA variant. The TDMA system may implement radio technologies such as Global System for Mobile Communication (GSM). The OFDMA system may implement radio technologies such as Ultra Mobile Broadband (UMB), Evolution-UTRA (E-UTRA), Institute of Electrical and Electronics Engineers (IEEE) 802.11 (Wireless Fidelity (Wi-Fi)), IEEE 802.16 (World Interoperability for Microwave Access (WiMAX)), IEEE 802.20, and Flash-OFDM, etc. UTRA and E-UTRA are part of Universal Mobile Telecommunications System (UMTS). LTE and more advanced LTE (such as LTE-A) are new UMTS releases using E-UTRA. UTRA, E-UTRA, UMTS, LTE, LTE-A and GSM are described in the documents from the organization named "3rd Generation Partnership Project (3GPP)". CDMA2000 and UMB are described in the documents from the organization named "3GPP2". The technologies described herein may be applied not only to the abovementioned systems and radio technologies but also to other systems and radio technologies.

Terms "first", "second" and the like in the description and claims of the disclosure are adopted not to describe a specific sequence or order but to distinguish similar objects. It should be understood that data used like this may be interchanged as appropriate such that the embodiments of the disclosure described herein may be implemented, for example, according to sequences in addition to those illustrated or described here.

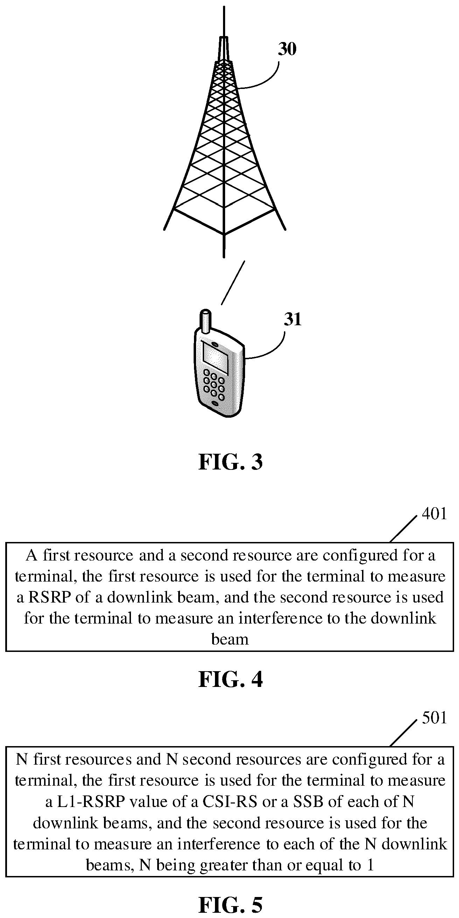

The embodiments of the disclosure will be introduced below in combination with the drawings. A measurement method and device provided in the embodiments of the disclosure may be applied to a wireless communication system. Referring to FIG. 3, a schematic architecture diagram of a wireless communication system provided in an embodiment of the disclosure is shown. As shown in FIG. 3, the wireless communication system may include a network device 30 and a terminal. The terminal is recorded as User Equipment (UE) 31. The UE 31 may communicate with (transmit signaling or data to/from) the network device 30. In practical applications, a connection between each of the abovementioned devices may be a wireless connection. In order to conveniently and intuitively represent a connection relationship between each of the devices, solid lines are used in FIG. 3.

The terminal provided in the embodiment of the disclosure may be a mobile phone, a tablet computer, a notebook computer, an Ultra-Mobile Personal Computer (UMPC), a netbook or Personal Digital Assistant (PDA), a Mobile Internet Device (MID), a wearable device, a vehicle-mounted device, etc.

The network device 30 provided in the embodiment of the disclosure may be a base station. The base station may be a commonly used base station, or may be an evolved node base station (eNB), or may be a device in a 5G system such as a network device (for example, a next-generation node base station (gNB)) or a Transmission and Reception Point (TRP), etc.

Referring to FIG. 4, an embodiment of the disclosure provides a measurement method. An execution body of the method may be a network device. The following specific operations are included.

In operation 401, a first resource and a second resource are configured for a terminal, the first resource is configured for the terminal to measure a RSRP of a downlink beam, and the second resource is configured for the terminal to measure an interference to the downlink beam.

In the embodiment of the disclosure, the second resource may be a ZP CSI-RS resource, or a NZP CSI-RS, or a SSB resource.

In the embodiment of the disclosure, the resource configured to measure the interference to the downlink beam is configured to improve the accuracy of measuring a L1-SINR value of the downlink beam by the terminal.

Referring to FIG. 5, an embodiment of the disclosure also provides a measurement method. An execution body of the method may be a network device. The following specific operations are included.

In operation 501, N first resources and N second resources are configured for a terminal, the first resource is configured for the terminal to measure a L1-RSRP value of a CSI-RS or a SSB of a downlink beam, the second resource is configured for the terminal to measure an interference to the downlink beam, and N is greater than or equal to 1.

In the embodiment of the disclosure, the second resource may be a ZP CSI-RS resource, or a NZP CSI-RS resource, or a SSB resource.

In the embodiment of the disclosure, the terminal may measure L1-SINR values of N downlink beams according to the N first resources and N second resources configured by the network device, so that the accuracy of the L1-SINR value of the downlink beam is improved.

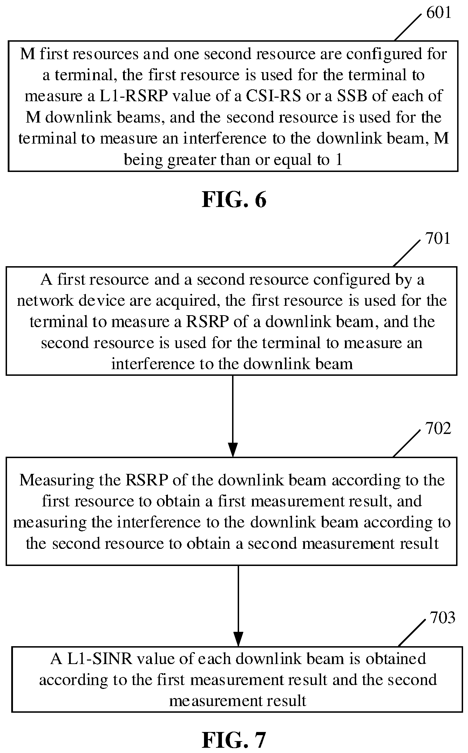

Referring to FIG. 6, an embodiment of the disclosure also provides a measurement method. An execution body of the method may be a network device. The following specific operations are included.

In operation 601, M first resources and one second resource are configured for a terminal, the first resource is configured for the terminal to measure a L1-RSRP value of a CSI-RS or a SSB of a downlink beam, the second resource is configured for the terminal to measure an interference to the downlink beam, and M is greater than or equal to 1.

In the embodiment of the disclosure, the second resource may be a ZP CSI-RS resource, or a NZP CSI-RS resource, or a SSB resource.

In the embodiment of the disclosure, the terminal may measure L1-SINR values of M downlink beams according to the M first resources and one second resource configured by the network device, so that the L1-SINR value of each downlink beam is measured on the premise of reducing the resource overhead and ensuring the measurement accuracy.

Referring to FIG. 7, an embodiment of the disclosure also provides a measurement method. An execution body of the method may be a terminal. The following specific operations are included.

In operation 701, a first resource and a second resource configured by a network device are acquired, the first resource is configured for the terminal to measure a RSRP of a downlink beam, and the second resource is configured for the terminal to measure an interference to the downlink beam.

In operation 702, a first measurement result is obtained by measuring the RSRP of the downlink beam according to the first resource, and a second measurement result is obtained by measuring the interference to the downlink beam according to the second resource.

In operation 703, a L1-SINR value of each downlink beam is obtained according to the first measurement result and the second measurement result.

In the embodiment of the disclosure, the terminal may obtain the L1-SINR value of each downlink beam according to the RSRP of the downlink beam and the interference to the downlink beam, so that the problem that a downlink beam measurement in the related art is only based on the L1-RSRP value and does not consider interferences to downlink beams is solved.

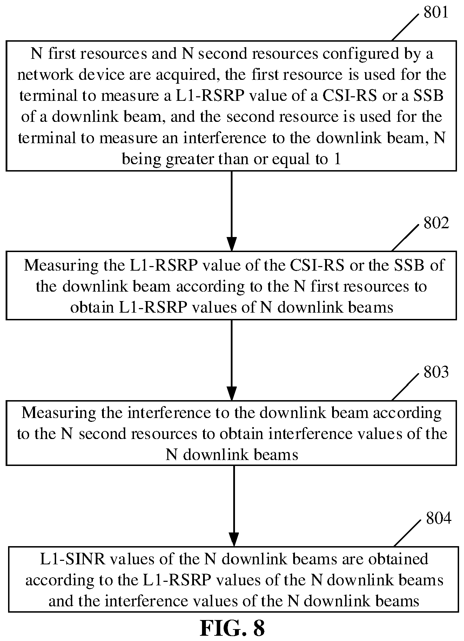

Referring to FIG. 8, an embodiment of the disclosure also provides a measurement method. An execution body of the method may be a terminal. The following specific operations are included.

In operation 801, N first resources and N second resources configured by a network device are acquired, the first resource is configured for the terminal to measure a L1-RSRP value of a CSI-RS or a SSB of a downlink beam, the second resource is configured for the terminal to measure an interference to the downlink beam, and N is greater than or equal to 1.

In the embodiment of the disclosure, the second resource may be a ZP CSI-RS resource, or a NZP CSI-RS resource, or a SSB resource.

In operation 802, L1-RSRP values of N downlink beams are obtained by measuring the L1-RSRP value of the CSI-RS or the SSB of the downlink beam according to the N first resources.

In operation 803, interference values of the N downlink beams are obtained by measuring the interference to the downlink beam according to the N second resources.

In operation 804, L1-SINR values of the N downlink beams are obtained according to the L1-RSRP values of the N downlink beams and the interference values of the N downlink beams.

In the embodiment of the disclosure, the method may further include any one of the following operations after the operation 804.

One CSI or SSBRI and at least one of the corresponding L1-RSRP value or L1-SINR value are reported to the network device.

Two CRIs or SSBRIs and at least one of the corresponding L1-RSRP values or L1-SINR values are differentially reported to the network device.

Four CRIs or SSBRIs and at least one of the corresponding L1-RSRP values or L1-SINR values are differentially reported to the network device.

In the embodiment of the disclosure, the terminal may obtain the L1-SINR of each downlink beam according to the RSRP of the downlink beam and the interference to the downlink beam, so that the problem that a downlink beam measurement in the related art is only based on L1-RSRP value and does not consider interferences to downlink beams is solved.

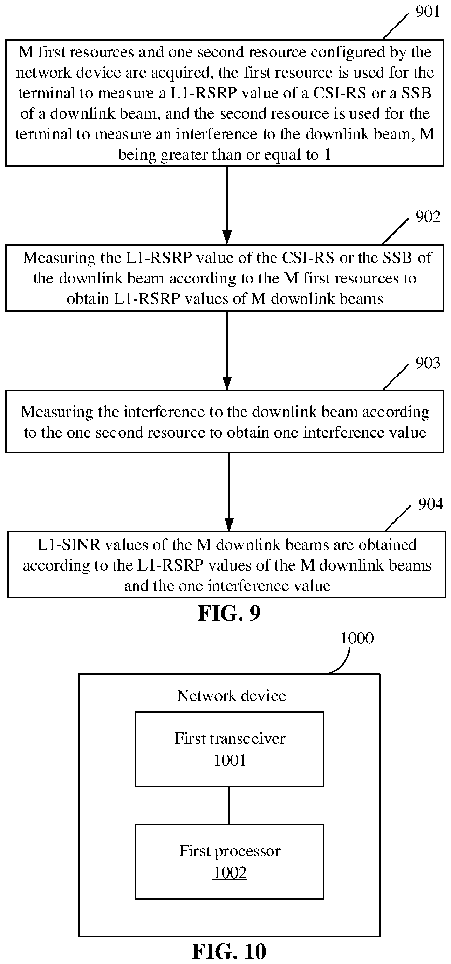

Referring to FIG. 9, an embodiment of the disclosure also provides a measurement method. An execution body of the method may be a terminal. The following specific operations are included.

In operation 901, M first resources and one second resource configured by the network device are acquired, the first resource is configured for the terminal to measure a L1-RSRP value of a CSI-RS or a SSB of a downlink beam, the second resource is configured for the terminal to measure an interference to the downlink beam, and M is greater than or equal to 1.

In operation 902, L1-RSRP values of M downlink beams are obtained by measuring the L1-RSRP value of the CSI-RS or the SSB of the downlink beam according to the M first resources.

In operation 903, one interference value is obtained by measuring the interference to the downlink beam according to the one second resource.

In operation 904, L1-SINR values of the M downlink beams are obtained according to the L1-RSRP values of the M downlink beams and the one interference value.

In the embodiment of the disclosure, the second resource may be a ZP CSI-RS resource, or a NZP CSI-RS resource, or a SSB resource.

In the embodiment of the disclosure, the method may further include any one of the following operations after the operation 904.

One CSI or SSBRI and at least one of the corresponding L1-RSRP value or L1-SINR value are reported to the network device.

Two CRIs or SSBRIs and at least one of the corresponding L1-RSRP values or L1-SINR values are differentially reported to the network device.

Four CRIs or SSBRIs and at least one of the corresponding L1-RSRP values or L1-SINR values are differentially reported to the network device.

Exemplarily, in case of Repetition off, in order to measure the L1-SINR value, the network device configures M CSI-RS or SSB resources to measure the L1-RSRP value, and in addition, the network device is required to configure only one ZP CSI-RS or NZP CSI-RS resource to measure the interference, to obtain the L1-SINR value of each beam, so that the resource overhead is reduced greatly.

The embodiments of the disclosure will be introduced below in combination with three examples.

### First Example

For Repetition on, a base station sends the CSI-RS in a fixed beam direction, and UE rotates its own beam receiving direction at different moments to receive the CSI-RS, and measures a L1-RSRP value of the CSI-RS of each receiving beam. In such case, the UE rotates its own receiving direction to receive signals, and measures different interferences in each receiving direction. Therefore, in order to measure the L1-SINR value, the base station is required to configure N CSI-RS resources to measure the L1-RSRP value, and is also required to configure N ZP CSI-RS or NZP CSI-RS resources to measure the interference, to further obtain L1-SINR values of N beams.

### Second Example

Repetition off represents that the base station sends the CSI-RS in multiple beam directions, and the UE measures a L1-RSRP value of the CSI-RS of a beam in each direction. For the UE, the same interference is measured if its own receiving direction is kept unchanged.

In case of Repetition off, the UE is not required to rotate its own receiving direction. Therefore, in order to measure the L1-SINR value, the base station configures N CSI-RS resources to measure the L1-RSRP value, and in addition, the base station is required to configure only one ZP CSI-RS or NZP CSI-RS resource to measure the interference, to obtain the L1-SINR value of each beam, so that the resource overhead is reduced greatly. Moreover, the accuracy of the obtained L1-SINR value is the same as the accuracy of the L1-SINR value obtained by configuring N ZP CSI-RS or NZP CSI-RS resources.

### Third Example

Based on the first example and second example, a beam reporting format of the terminal is as follows.
(1) When nrofReportedRS=1, one CSI (or SSBRI) and at least one of the corresponding L1-RSRP value or L1-SINR value are reported.
(2) When nrofReportedRS>1, one, two or four CRIs (or SSBRIs) and at least one of the corresponding L1-RSRP values or L1-SINR values are differentially reported.

The embodiments of the disclosure also provide a network device. Since the principle used by the network device to solve problems is similar to that in the measurement method in the embodiments of the disclosure, implementation of the network device may refer to implementation of the method. Repeated parts will not be elaborated.

Referring to FIG. 10, an embodiment of the disclosure also provides a network device. The network device 1000 includes a first transceiver 1001 and a first processor 1002.

The first processor 1002 is configured to configure a first resource and a second resource for a terminal, the first resource is configured for the terminal to measure a RSRP of a downlink beam, and the second resource is configured for the terminal to measure an interference to the downlink beam.

In the embodiment of the disclosure, the first processor 1002 is further configured to configure N first resources and N second resources for the terminal, the first resource is configured for the terminal to measure a L1-RSRP value of a CSI-RS or a SSB of the downlink beam, the second resource is configured for the terminal to measure the interference to the downlink beam, and N is greater than or equal to 1.

In the embodiment of the disclosure, the first processor 1002 is further configured to configure M first resources and one second resource for the terminal, the first resource is configured for the terminal to measure a L1-RSRP value of a CSI-RS or a SSB of the downlink beam, the second resource is configured for the terminal to measure the interference to the downlink beam, and M is greater than or equal to 1.

In the embodiment of the disclosure, the second resource may be a ZP CSI-RS resource, or a NZP CSI-RS resource, or a SSB resource.

The network device provided in the embodiment of the disclosure may execute the method embodiments, and implementation principles and technical effects thereof are similar, and will not be elaborated in the embodiment.

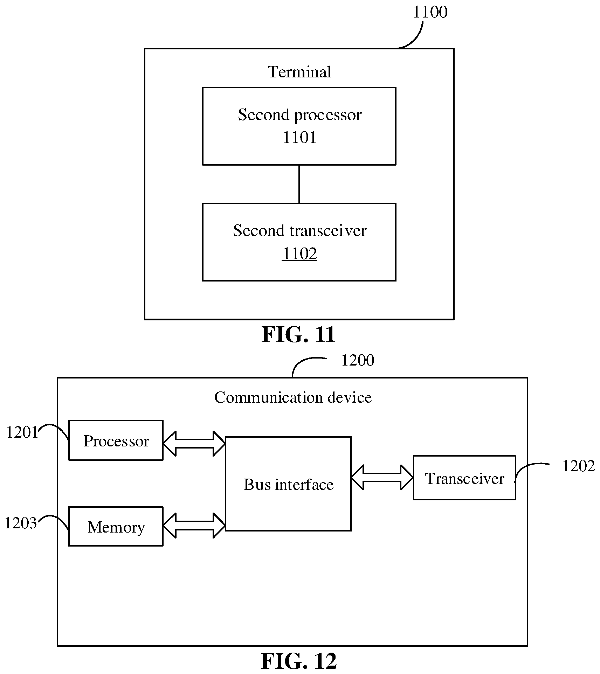

Referring to FIG. 11, an embodiment of the disclosure provides a terminal. The terminal 1100 includes a second processor 1101 and a second transceiver 1102.

The second transceiver 1102 is configured to acquire a first resource and a second resource configured by a network device, the first resource is configured for the terminal to measure a RSRP of a downlink beam, and the second resource is configured for the terminal to measure an interference to the downlink beam.

The second processor 1101 is configured to obtain a first measurement result by measuring the RSRP of the downlink beam according to the first resource, and obtain a second measurement result by measuring the interference to the downlink beam according to the second resource.

The second processor 1101 is further configured to obtain a L1-SINR value of each downlink beam according to the first measurement result and the second measurement result.

In the embodiment of the disclosure, the second transceiver 1102 is further configured to acquire N first resources and N second resources configured by the network device, the first resource is configured for the terminal to measure a L1-RSRP value of a CSI-RS or a SSB of the downlink beam, the second resource is configured for the terminal to measure the interference to the downlink beam, and N is greater than or equal to 1.

The second processor 1101 is further configured to obtain L1-RSRP values of N downlink beams by measuring the L1-RSRP value of the CSI-RS or the SSB of the downlink beam according to the N first resources, and obtain interference values of the N downlink beams by measuring the interference to the downlink beam according to the N second resources.

The second processor 1101 is further configured to obtain L1-SINR values of the N downlink beams according to the L1-RSRP values of the N downlink beams and the interference values of the N downlink beams.

In the embodiment of the disclosure, the second transceiver 1102 is further configured to acquire M first resources and one second resource configured by the network device, the first resource is configured for the terminal to measure a L1-RSRP value of a CSI-RS or a SSB of the downlink beam, the second resource is configured for the terminal to measure the interference to the downlink beam, and M is greater than or equal to 1.

The second processor 1101 is further configured to obtain L1-RSRP values of M downlink beams by measuring the L1-RSRP value of the CSI-RS or the SSB of the downlink beams according to the M first resources, and obtain one interference value by measuring the interference to the downlink beam according to the one second resource.

The second processor 1101 is further configured to obtain L1-SINR values of the M downlink beams according to the L1-RSRP values of the M downlink beams and the one interference value.

In the embodiment of the disclosure, the second resource may be a ZP CSI-RS resource, or a NZP CSI-RS resource, or a SSB resource.

In the embodiment of the disclosure, the second transceiver 1102 is further configured to:
report one CRI or SSBRI and at least one of the corresponding L1-RSRP value or L1-SINR value to the network device;
or,
differentially report two CRIs or SSBRIs and at least one of the corresponding L1-RSRP values or L1-SINR values to the network device;
or,
differentially report four CRIs or SSBRIs and at least one of the corresponding L1-RSRP values or L1-SINR values to the network device.

The terminal provided in the embodiment of the disclosure may execute the method embodiments, and implementation principles and technical effects thereof are similar, and will not be elaborated in the embodiment.

Referring to FIG. 12, FIG. 12 is a structure diagram of a communication device applied to an embodiment of the disclosure. As shown in FIG. 12, the communication device 1200 includes a processor 1201, a transceiver 1202, a memory 1203, and a bus interface.

In an embodiment of the disclosure, the communication device 1200 further includes a program stored in the memory 1203 and executable on the processor 1201. The program is executed by the processor 1201 to implement the following operations: configuring a first resource and a second resource for a terminal, the first resource is used for the terminal to measure a RSRP of a downlink beam, and the second resource is used for the terminal to measure an interference to the downlink beam.

In another embodiment of the disclosure, the communication device 1200 further includes a program stored in the memory 1203 and executable on the processor 1201. The program is executed by the processor 1201 to implement the following operations: acquiring a first resource and second resource configured by a network device, the first resource is used for a terminal to measure a RSRP of a downlink beam, and the second resource is used for the terminal to measure an interference to the downlink beam; obtaining a first measurement result by measuring the RSRP of the downlink beam according to the first resource, and obtaining a second measurement result by measuring the interference to the downlink beam according to the second resource; and obtaining a L1-SINR value of each downlink beam according to the first measurement result and the second measurement result.

In FIG. 12, the bus architecture may include any numbers of interconnected buses and bridges, and specifically connects various circuits of one or more processors represented by the processor 1201 and a memory represented by the memory 1203. The bus architecture may also connect various other circuits such as a peripheral device, a voltage stabilizer, a power management circuit, etc. These are well known in the art, and thus further descriptions thereof are omitted herein. The bus interface provides an interface. The transceiver 1202 may be multiple elements, namely including a transmitter and a receiver, and provides units configured to communicate with various other apparatuses through a transmission medium.

The processor 1201 is responsible for management over the bus architecture and general processing. The memory 1203 may store data used by the processor 1201 when executing operations.

The communication device provided in the embodiment of the disclosure may execute the method embodiments, and implementation principles and technical effects thereof are similar, and will not be elaborated in the embodiment.

It should be understood that "one embodiment" and "an embodiment" mentioned in the whole description mean that specific features, structures or characteristics related to the embodiment are included in at least one embodiment of the disclosure. Therefore, "in one embodiment" or "in an embodiment" presented throughout the description does not necessarily refer to the same embodiment. In addition, these specific features, structures or characteristics may be combined in one or more embodiments freely as appropriate.

In each embodiment of the disclosure, it should be understood that a magnitude of a sequence number of each process does not mean an execution sequence and the execution sequence of each process should be determined by its function and an internal logic and should not form any limit to implementation processes of the embodiments of the disclosure.

In the embodiments provided in the disclosure, it should be understood that "B corresponding to A" represents that B is associated with A and B may be determined according to A. However, it should also be understood that determining B according to A does not mean determining B only according to A, and B may also be determined according to at least one of A or other information.

In some embodiments provided by the disclosure, it should be understood that the disclosed method and apparatus may be implemented in another manner. For example, the apparatus embodiment as described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection implemented through some interfaces, apparatuses or units, and may be electrical and mechanical or adopt other forms.

In addition, each functional unit in each embodiment of the disclosure may be integrated into a processing unit, each unit may also be physically included independently, and two or more than two units may also be integrated into a unit. The integrated unit may be implemented in a hardware form and may also be implemented in form of hardware and software functional unit.

The integrated unit implemented in form of software functional unit may be stored in a computer-readable storage medium. The software function unit is stored in a storage medium, including multiple instructions configured to enable a computer device (which may be a personal computer, a server, a network-side device, etc.) to execute part of the steps of the method described in each embodiment of the disclosure. The storage medium includes various media capable of storing program codes such as a U disk, a mobile hard disk, a Read-Only Memory (ROM), a Random Access Memory (RAM), a magnetic disk, or an optical disk, etc.

It should be noted that the above division of each module of the network device and the terminal should be understood as a division of logical functions only, and during practical implementation, the modules may be completely or partially integrated into a physical entity, or may be separated physically. In addition, all these modules may be implemented in form of calling software through a processing element, or may be implemented in a hardware form, or part of the modules may be implemented in form of calling the software through the processing element, and part of the modules are implemented in the hardware form. For example, a determination module may be an independent processing element, or may be implemented by integrating into a certain chip of the apparatus, and in addition, may be stored in a memory of the apparatus in form of a program code, for a certain processing element of the apparatus to call and execute, to realize the function of the determination module. Other modules are implemented in a similar manner. Moreover, these modules may be completely or partially integrated or implemented independently. Here, the processing element may be an integrated circuit with a signal processing capability. In an implementation process, each step of the method or each abovementioned module may be completed by an integrated logic circuit in a hardware form in the processing element or an instruction in a software form.

For example, each module, unit, subunit or submodule may be configured as one or more integrated circuits for implementing the above method, for example, one or more Application Specific Integrated Circuits (ASICs), or one or more Digital Signal Processors (DSPs), or one or more Field Programmable Gate Arrays (FPGAs), etc. For another example, when a certain module is implemented in form of calling a program code through a processing element, the processing element may be a general-purpose processor, for example, a Central Processing Unit (CPU) or another processor capable of calling program codes. For another example, these modules may be integrated for implementation in form of a System-On-a-Chip (SOC).

Terms "first", "second", and the like in the description and claims of the disclosure are used not to describe a specific sequence or order but to distinguish similar objects. It should be understood that data used like this may be interchanged as appropriate such that the embodiments of the disclosure described here are implemented, for example, according to sequences in addition to those illustrated or described here. In addition, terms "include" and "have" and any transformations thereof are intended to cover nonexclusive inclusions. For example, a process, method, system, product or device including a series of steps or units is not limited to the steps or units that are clearly listed but may include other steps or units that are not clearly listed or intrinsic to the process, the method, the product or the device. Moreover, "and/or" used in the description and the claims represents at least one of connected objects. For example, A and/or B and/or C represents that there are seven conditions, i.e., independent existence of A, independent existence of B, independent existence of C, co-existence of A and B, co-existence of B and C, co-existence of A and C, and co-existence of A, B and C. Similarly, "at least one of A and B" used in the description and the claims should be understood as "independent existence of A, independent existence of B, or co-existence of A and B".

The above is the optional implementation of the disclosure. It should be pointed out that those of ordinary skill in the art may further make several improvements and embellishments without departing from the principle of the disclosure, and these improvements and embellishments shall also be considered as falling within the scope of protection of the disclosure.

## Claims

1. A measurement method, applied to a network device, the method comprising:
configuring a first resource and a second resource for a terminal, wherein the first resource is used for the terminal to measure a Reference Signal Receive Power (RSRP) of a downlink beam, and the second resource is used for the terminal to measure an interference to the downlink beam.

2. The method of claim 1, wherein configuring the first resource and the second resource for the terminal, the first resource is used for the terminal to measure the RSRP of the downlink beam, and the second resource is used for the terminal to measure the interference to the downlink beam, comprises:
configuring N first resources and N second resources for the terminal, wherein the first resource is used for the terminal to measure a Layer One-RSRP (L1-RSRP) value of a Channel State Information Reference Signal (CSI-RS) or a Synchronization Signal and Physical Broadcast Channel (PBCH) Block (SSB) of the downlink beam, and the second resource is used for the terminal to measure the interference to the downlink beam, N being greater than or equal to 1.

3. The method of claim 1, wherein configuring the first resource and the second resource for the terminal, the first resource is used for the terminal to measure the RSRP of the downlink beam, and the second resource is used for the terminal to measure the interference to the downlink beam, comprises:
configuring M first resources and one second resource for the terminal, wherein the first resource is used for the terminal to measure a Layer One-RSRP (L1-RSRP) value of a Channel State Information Reference Signal (CSI-RS) or a Synchronization Signal and Physical Broadcast Channel (PBCH) Block (SSB) of the downlink beam, and the second resource is used for the terminal to measure the interference to the downlink beam, M being greater than or equal to 1.

4. The method of any one of claims 1-3, wherein the second resource is a Zero Power (ZP) CSI-RS resource, or a Non-Zero Power (NZP) CSI-RS resource, or a SSB resource.

5. A measurement method, applied to a terminal, the method comprising:
acquiring a first resource and a second resource configured by a network device, wherein the first resource is used for the terminal to measure a Reference Signal Receive Power (RSRP) of a downlink beam, and the second resource is used for the terminal to measure an interference to the downlink beam;
measuring the RSRP of the downlink beam according to the first resource to obtain a first measurement result, and measuring the interference to the downlink beam according to the second resource to obtain a second measurement result; and
obtaining a Layer One-Signal to Interference plus Noise Ratio (L1-SINR)value of each downlink beam according to the first measurement result and the second measurement result.

6. The method of claim 5, wherein acquiring the first resource and the second resource configured by the network device, the first resource is used for the terminal to measure the RSRP of the downlink beam, and the second resource is used for the terminal to measure the interference to the downlink beam, comprises:
acquiring N first resources and N second resources configured by the network device, wherein the first resource is used for the terminal to measure a Layer One-RSRP (L1-RSRP) value of a Channel State Information Reference Signal (CSI-RS) or a Synchronization Signal and Physical Broadcast Channel (PBCH) Block (SSB) of the downlink beam, and the second resource is used for the terminal to measure the interference to the downlink beam, N being greater than or equal to 1,
measuring the RSRP of the downlink beam according to the first resource to obtain the first measurement result, and measuring the interference to the downlink beam according to the second resource to obtain the second measurement result, comprises:
measuring L1-RSRP value of the CSI-RS or the SSB of the downlink beam according to the N first resources, to obtain the L1-RSRP values of the N downlink beams; and
measuring the interference to the downlink beam according to the N second resources, to obtain interference values of the N downlink beams, and
obtaining the L1-SINR value of the downlink beam according to the first measurement result and the second measurement result comprises:
obtaining L1-SINR values of the N downlink beams according to the L1-RSRP values of the N downlink beams and the interference values of the N downlink beams.

7. The method of claim 5, wherein acquiring the first resource and the second resource configured by the network device, the first resource is used for the terminal to measure the RSRP of each downlink beam, and the second resource is used for the terminal to measure the interference to each downlink beam, comprises:
acquiring M first resources and one second resource configured by the network device, wherein the first resource is used for the terminal to measure a Layer One-RSRP (L1-RSRP) value of a Channel State Information Reference Signal (CSI-RS) or a Synchronization Signal and Physical Broadcast Channel (PBCH) Block (SSB) of the downlink beam, and the second resource is used for the terminal to measure the interference to the downlink beam, and M being greater than or equal to 1,
measuring the RSRP of the downlink beam according to the first resource to obtain the first measurement result, and measuring the interference to the downlink beam according to the second resource to obtain the second measurement result, comprises:
measuring the L1-RSRP value of the CSI-RS or the SSB of the downlink beam according to the M first resources, to obtain L1-RSRP values of M downlink beams; and
measuring the interference to the downlink beam according to the one second resource, to obtain one interference value, and
obtaining the L1-SINR value of the downlink beam according to the first measurement result and the second measurement result comprises:
obtaining L1-SINR values of the M downlink beams according to the L1-RSRP walues of the M downlink beams and the one interference value.

8. The method of any one of claims 5-7, wherein the second resource is a Zero Power (ZP) CSI-RS resource, or a Non-Zero Power (NZP) CSI-RS resource, or a SSB resource.

9. The method of claim 6 or 7, further comprising:
reporting, to the network device, one CSI-RS Resource Indication (CRI) or SSB Resource Indication (SSBRI) and at least one of: the corresponding L1-RSRP value or L1-SINR value;
or,
differentially reporting, to the network device, two CRIs or SSBRIs and at least one of: the corresponding L1-RSRP values or L1-SINR values;
or,
differentially reporting, to the network device, four CRIs or SSBRIs and at least one of: the corresponding L1-RSRP values or L1-SINR values.

10. A network device, comprising a first transceiver and a first processor, wherein
the first processor is configured to configure a first resource and a second resource for a terminal, wherein the first resource is used for the terminal to measure a Reference Signal Receive Power (RSRP) of a downlink beam, and the second resource is used for the terminal to measure an interference to the downlink beam.

11. The network device of claim 10, wherein the first processor is further configured to configure N first resources and N second resources for the terminal, wherein the first resource is used for the terminal to measure a Layer One-RSRP (L1-RSRP) value of a Channel State Information Reference Signal (CSI-RS) or a Synchronization Signal and Physical Broadcast Channel (PBCH) Block (SSB) of the downlink beam, and the second resource is used for the terminal to measure the interference to the downlink beam, N being greater than or equal to 1.

12. The network device of claim 10, wherein the first processor is further configured to configure M first resources and one second resource for the terminal, wherein the first resource is used for the terminal to measure a Layer One-RSRP (L1-RSRP) value of a Channel State Information Reference Signal (CSI-RS) or a Synchronization Signal and Physical Broadcast Channel (PBCH) Block (SSB) of each of M downlink beams, and the second resource is used for the terminal to measure the interference to the downlink beam, M being greater than or equal to 1.

13. The network device of any one of claims 10-12, wherein the second resource is a Zero Power (ZP) CSI-RS resource, or a Non-Zero Power (NZP) CSI-RS resource, or a SSB resource.

14. A terminal, comprising a second processor and a second transceiver, wherein
the second transceiver is configured to acquire a first resource and a second resource configured by a network device, wherein the first resource is used for the terminal to measure a Reference Signal Receive Power (RSRP) of a downlink beam, and the second resource is used for the terminal to measure an interference to the downlink beam;
the second processor is configured to measure the RSRP of the downlink beam according to the first resource to obtain a first measurement result, and measure the interference to the downlink beam according to the second resource to obtain a second measurement result; and
the second processor is further configured to obtain a Layer One-Signal to Interference plus Noise Ratio (L1-SINR)value of each downlink beam according to the first measurement result and the second measurement result.

15. The terminal of claim 14, wherein the second transceiver is further configured to acquire N first resources and N second resources configured by the network device, wherein the first resource is used for the terminal to measure a Layer One-RSRP (L1-RSRP) value of a Channel State Information Reference Signal (CSI-RS) or a Synchronization Signal and Physical Broadcast Channel (PBCH) Block (SSB) of each of N downlink beams, and the second resource is used for the terminal to measure the interference to each of the N downlink beams, N being greater than or equal to 1; and
the second processor is further configured to measure the L1-RSRP value of the CSI-RS or the SSB of each of the N downlink beams according to the N first resources to obtain a L1-RSRP value of each downlink beam, and measure the interference to each of the N downlink beams according to the N second resources to obtain a L1-SINR value of each downlink beam.

16. The terminal of claim 14, wherein the second transceiver is further configured to acquire M first resources and one second resource configured by the network device, wherein the first resource is used for the terminal to measure a Layer One-RSRP (L1-RSRP) value of a Channel State Information Reference Signal (CSI-RS) or a Synchronization Signal and Physical Broadcast Channel (PBCH) Block (SSB) of each of M downlink beams, and the second resource is used for the terminal to measure the interference to each downlink beam, M being greater than or equal to 1; and
the second processor is further configured to:
measure the L1-RSRP value of the CSI-RS or the SSB of each of the M downlink beams according to the M first resources, to obtain a L1-RSRP value of each downlink beam; and
measure the interference to the downlink beam according to the one second resource, to obtain a L1-SINR value of each downlink beam.

17. The terminal of any one of claims 14-16, wherein the second resource is a Zero Power (ZP) CSI-RS resource, or a Non-Zero Power (NZP) CSI-RS resource, or a SSB resource.

18. The terminal of claim 15 or 16, wherein the second transceiver is further configured to:
report, to the network device, one CSI-RS Resource Indication (CRI) or SSB Resource Indication (SSBRI) and at least one of: the corresponding L1-RSRP value or L1-SINR value;
or,
differentially report, to the network device, two CRIs or SSBRIs and at least one of: the corresponding L1-RSRP values or L1-SINR values;
or,
differentially report, to the network device, four CRIs or SSBRIs and at least one of: the corresponding L1-RSRP values or L1-SINR values.

19. A communication device, comprising a processor, a memory, and a program stored in the memory and executable on the processor, wherein the program is executed by the processor to implement the measurement method of any one of claims 1-4 or the measurement method of any one of claims 5-9.

20. A computer-readable storage medium having stored therein a computer program that, when executed by a processor, causes to processor to perform the measurement method of any one of claims 1-4 or perform the measurement method of any one of claims 5-9.
